# EUROPEAN PATENT SPECIFICATION

(11) **EP 4 442 007 B1**
(45) Date of publication and mention of the grant of the patent: **28.01.2026**
(21) Application number: 22826698.7
(22) Date of filing: 30.11.2022
(51) Int. Cl.: H04N 23/60, H04N 23/81, H04N 25/47, H04N 23/45, H04N 25/60

(54) **HIGH ACCURACY REPRESENTATION OF EVENTS GENERATED BY AN EVENT-BASED VISION SENSOR**
HOHE GENAUIGKEITSDARSTELLUNG VON EREIGNISSEN, DIE VON EINEM EREIGNISBASIERTEN VISION-SENSOR ERZEUGT WERDEN
REPRÉSENTATION HAUTE PRÉCISION DES ÉVÉNEMENTS GÉNÉRÉS PAR UN CAPTEUR DE VISION ÉVÉNEMENTIEL

(30) Priority: 01.12.2021 US 202163284650 P
(43) Date of publication of application: 09.10.2024
(73) Proprietor: Sony Semiconductor Solutions Corporation, Atsugi-shi, Kanagawa 243-0014 (JP)
(72) Inventor: SEMEL, Lavi, 6912109 Tel Aviv (IL); WEISSMAN, Eitan, 6423721 Tel Aviv (IL); LUSKY, Itay, 4451915 Kfar Saba (IL)
(74) Representative: MFG Patentanwälte Meyer-Wildhagen Meggle-Freund Gerhard PartG mbB
(86) International application number: PCT/IB2022/061577
(87) International publication number: WO 2023/100092

(56) References cited:
- US-A1- 2018 098 082
- US-A1- 2018 098 082
- US-A1- 2021 321 052
- US-A1- 2021 321 052

## Description

### TECHNICAL FIELD

Embodiments described herein relate generally to image sensing, and particularly to methods and systems for high accuracy representation of events generated by an Event-based Vision Sensor (EVS).

### BACKGROUND

An image sensor typically comprises an array of light-sensitive elements (e.g., photodiodes) that convert light into electrical analog signals. The amplitudes of the analog signals depend on the luminance levels to which the light-sensitive elements are exposed and on the exposure time. The analog signals are typically further sampled and converted into digital valued luminance levels.

Various types of image sensors are known. For example, a Red-Green-Blue (RGB) image sensor is a color sensor in which each of the light-sensitive elements is sensitive to one of the red, green, and blue colors. As another example, the Event-based Vision Sensor (EVS) is a new emerging type of an image sensor, designed to detect changes in the luminance level sensed, and is suitable for computer vision and other applications that involve motion scenes.

US 2021/321052 A1 discloses an imaging system that includes an event camera that is configured to capture a first image of a scene. The system also includes a shutter camera that is collocated with the event camera, where the shutter camera is configured to capture a second image of the scene. The system also includes a processor that is operatively coupled to the event camera and the shutter camera. The processor is configured to apply guided event filtering on the first image and the second image. The processor is also configured to generate a third image based on filtering of the first image and the second image.

### SUMMARY

According to a first aspect, the present invention provides a system in accordance with independent claim 1. According to a second aspect, the present invention provides a method in accordance with independent claim 9. Further aspects are set forth in the dependent claims, the drawings and the following description.

An embodiment that is described herein provides an apparatus that includes an auxiliary image sensor and processing logic. The auxiliary image sensor is configured to measure luminance levels associated with a plurality of Event-based Vision Sensor (EVS) pixels. The processing logic is configured to generate, based on the measured luminance levels, auxiliary information related to impairments in triggering events by the plurality of EVS pixels, to receive events triggered by the plurality of EVS pixels, the events are representable using a first representation being noisy due to the impairments, to generate, based on the auxiliary information, a second representation of the events that is less noisy than the first representation, and to output the events in accordance with the second representation.

In the claimed invention, the occurrence times of the events differ from respective times at which the EVS pixels are tuned to generate the events, by respective latency values that depend at least on luminance values to which the EVS pixels are exposed, and the processing logic is configured to generate the auxiliary information by estimating the latency values depending on the luminance values, and to generate the second representation by filtering the events depending on the estimated latency values. In other embodiments, the processing logic is configured to evaluate, based on the measured luminance levels, statistical properties of the latency values for one or more groups of the EVS pixels, and to generate the auxiliary information for the EVS pixels in the one or more groups based on the respective statistical properties of the latency values in the one or more groups. In yet other embodiments, the processing logic is configured to determine, based on the statistical properties, one or more temporal-spatial filters, and to filter the events using the one or more temporal-spatial filters.

In an embodiment, at least one of the temporal-spatial filters includes a linear filter. In another embodiment, the processing logic is configured to filter the received events for improving accuracy of the occurrence times reported by the events. In yet another embodiment, the processing logic is configured to evaluate a mean latency value for one or more EVS pixels based on the measured luminance levels, and to filter selected received events triggered by the one or more EVS pixels by modifying the occurrence times reported by the selected received events based on the mean latency value.

In some embodiments, the processing logic is configured to evaluate for one or more EVS pixels, based on the measured luminance levels, a Standard Deviation (STD) value of the latency values associated with the received events, to determine a filter based on the evaluated STD latency value, and to filter the received events triggered by the one or more EVS pixels using the determined filter, for producing a corresponding filtered event of the second representation. In other embodiments, the processing logic is further configured to generate the auxiliary information based on a configuration of the auxiliary image sensor and of a camera system including the auxiliary image sensor, including at least one or more of (i) an exposure time of the auxiliary image sensor, (ii) a gain of the auxiliary image sensor, and (iii) an optical aperture of the camera system. In yet other embodiments, the processing logic is configured to evaluate, based on the measured luminance levels, information indicative of expected rates of the events in one or more regions of the EVS pixels, to determine filters corresponding to the regions based on the respective expected rates, and to filter the received events using the determined filters.

In an embodiment, the processing logic is configured to identify a region in which the pixels are expected to produce no events, and to filter out events that were triggered by the pixels belonging to the identified region. In another embodiment, the processing logic is configured to output the events, in accordance with the second representation, via the interface, to a processor running a selected application, and to filter the received events, before being output, using a filter that is tailored to the selected application. In yet another embodiment, at least some functionality of the processing logic resides within the EVS including the plurality of EVS pixels.

There is additionally provided, in accordance with an embodiment that is described herein, a method, including, measuring by an auxiliary image sensor, luminance levels associated with a plurality of Event-based Vision Sensor (EVS) pixels. Based on the measured luminance levels, auxiliary information related to impairments in triggering events by the plurality of EVS pixels is generated. Events triggered by the plurality of EVS pixels are received, the events are representable using a first representation being noisy due to the impairments. Based on the auxiliary information, a second representation of the events that is less noisy than the first representation is generated, and the events are output in accordance with the second representation.

These and other embodiments will be more fully understood from the following detailed description of the embodiments thereof, taken together with the drawings in which:

### BRIEF DESCRIPTION OF THE DRAWINGS

Fig. 1 is a block diagram that schematically illustrates an event-based Computer Vision (CV) system, in accordance with an embodiment that is described herein;
Fig. 2 is a flow chart that schematically illustrates a method for filtering events depending on luminance levels, in accordance with an embodiment that is described herein;
Fig. 3 is a diagram that schematically illustrates events triggered by a given pixel, and example filter window lengths determined depending on estimated luminance levels, in accordance with an embodiment that is described herein;
Fig. 4 is a flow chart that schematically illustrates a method for correcting occurrence times of events, in accordance with an embodiment that is described herein; and
Fig. 5 is a diagram that schematically illustrates events whose occurrence times are corrected depending on estimated luminance levels, in accordance with an embodiment that is described herein.

### DETAILED DESCRIPTION OF EMBODIMENTS

### OVERVIEW

Embodiments that are described herein provide methods and systems for improved accuracy and reduced-noise representation of events generated by an Event-based Vision Sensor (EVS).

Various applications require capturing visual information using an image sensor. A conventional image sensor typically outputs luminance data per image pixel for the entire image, even when the luminance levels change only in a small fraction of the image pixels between consecutive image frames, which requires large bandwidth and computation resources.

Unlike conventional image sensors, an Event-based Vision Sensor (EVS) reports luminance data only for image pixels in which the luminance level varies, thus reducing the amount of data output by the image sensor and the processing resources needed for processing the visual information captured.

An EVS typically comprises an array of pixel circuits, each of which individually producing a signal depending on the luminance level falling on the pixel. The pixel circuit compares the current luminance level to a previous luminance level captured by the same pixel circuit. In response to detecting that the luminance has changed by an amount larger than a specified threshold, the pixel circuit triggers and outputs a corresponding event. Typically, an EVS pixel circuit detects variations in the luminance level in the logarithm domain, in which case the pixel circuit triggers an event upon detecting that a change in the Log luminance level has crossed a specified threshold.

In the present context, for the sake of brevity, the term "luminance level" commonly refers to the luminance level, or to the luminance level subjected to a Log function. In the present context the term "pixel circuit" is also referred to simply as a "pixel" for brevity.

In some embodiments, the EVS pixels are arranged in a Two-Dimensional (2D) array in any suitable geometrical configuration. For example, the pixels may be arranged in a rectangular matrix array. The event triggered by a given pixel in the 2D array comprises multiple event parameters, such as the time at which the event has occurred, the position of the pixel in the 2D array, and a polarity value associated with the luminance change (e.g., indicating whether the light luminance levels have changed from a dark level to a bright level or from a bright level to a dark level). After triggering an event, the pixel sets the new luminance level as a reference for triggering a subsequent event.

The EVS output (also referred to herein as a "representation") may be inaccurate or noisy for various reasons such as impairments in triggering the EVS events by the pixel circuits. For example, the EVS pixel may generate an event due to internal noise in the pixel circuit rather than based on the luminance level. Such noise is also referred to as "dark noise." As another example, the EVS pixel may fail to generate an event when the change in luminance level passes the specified threshold. This may occur, for example, when the actual threshold in the pixel circuit is lower than the specified threshold. As yet another example, the times of occurrence reported in the events may be inaccurate or noisy, as will be described below. It is noted that the impairments are typically nonuniform across the EVS pixel circuits.

Due to impairments in triggering the events by the pixel circuits, the EVS events typically report occurrence times that differ from respective ideal times at which the pixels are tuned to generate the events, by respective latency values. This is due to delays occurring in the analog and digital circuits of the pixel circuit. The latency values associated with the events (e.g., of a given pixel exposed to a given luminance level) may be modeled as a random variable distributed in accordance with some probability density function. Due to the differences from ideal times, erroneous occurrence times may be reported by at least some of the events.

In some embodiments that will be described below, the latency values associated with the events are statistically distributed depending on the luminance levels to which the pixels generating the events are exposed. For example, the mean value and the Standard Deviation (STD) value of the underlying distribution typically decrease with increase in the luminance level.

Methods for mitigating noisy output representation of the EVS events, e.g., jitter and delay of the times of occurrence reported by EVS events will be described in detail below.

The events output by the EVS are typically processed by a suitable processor that runs tasks such as Computer Vision (CV) or Artificial Intelligence (AI) tasks. The processor may run low-level tasks such as an optical flow, or high-level tasks such as image reconstruction (generating an image of the scene based on the events), motion detection, object classification and the like.

In some EVS implementations, the event occurrence time (also referred to as "timestamps") are sampled at a microsecond granularity and output independently and asynchronously. In other EVS solutions, the events are output in a synchronous manner, meaning that all the events happening at a certain (typically short) period of time are assigned the same timestamp. In other words, the EVS produces frames (packets) at a certain periodicity, wherein for each frame, the EVS outputs only triggered events with their polarity and position (x, y).

The EVS can be viewed as a data-driven sensor. For example, with high-motion scenes, the EVS produces many events and *vice versa.* When no changes occur in the scene, no events will be triggered.

An EVS camera typically produces events at low-latency and high temporal-resolution. Therefore, in case of high movement of objects in the scene (or high movement of EVS camera), the EVS camera is expected to produce events at a high rate.

One approach to accommodate high event rate could be to process the events for generating a higher-level representation such as, for example, a sparse or dense optical flow. The CV processor then processes the optical flow representation at desired instances. This approach, however, typically does not take into consideration EVS impairments such as the variability in the latency values of the EVS events, which are not known or exposed to the CV processor.

In principle, to reduce the rate of events, the EVS could report some collective information regarding the raw events, instead of outputting the raw events themselves. For example, the EVS could report the number of events occurring per pixel in predefined intervals, or count the number of events occurring in a group of pixels in predefined intervals (pixel binning). Such representation methods are sometimes referred to as "voxel grid", "binning", or "image count", for example. Here too, conventionally the underlying representation may be too noisy because of unmitigated EVS impairments.

In some embodiments, a CV system comprises an EVS, processing logic and a conventional image sensor or any other device that captures light, e.g., an RGB sensor (which can be external to the EVS or part of the EVS). The RGB sensor outputs luminance values that are used to reduce noise in the EVS output representation by filtering the events and creating a less noisy representation method.

In the disclosed embodiments, luminance levels of individual pixels (or of groups of pixels) are estimated based on inputs from one or more external sources. An external source may comprise, for example, an additional image sensor such as an RGB sensor (also referred to herein as an "auxiliary sensor"). The measured luminance levels are used for generating an auxiliary information used to generate a cleaner (e.g., less noisy) representation of the events. In an embodiment, the measured luminance levels from the RGB sensor are converted to mean latency values and STD latency values, which are used in producing a high accuracy representation of the events. In another embodiment, the measured luminance levels are used for classifying the EVS pixels to regions having respective expected event rates. This can be used, for example, to focus on areas containing edges of objects in the scene, so as to eliminate events caused by dark noise.

Consider an embodiment of an apparatus that includes an auxiliary image sensor and processing logic. The auxiliary image sensor is configured to measure luminance levels associated with a plurality of Event-based Vision Sensor (EVS) pixels. The processing logic is configured to generate, based on the measured luminance levels, auxiliary information related to impairments in triggering events by the plurality of EVS pixels, to receive events triggered by the plurality of EVS pixels, the events are representable using a first representation being noisy due to the impairments, to generate, based on the auxiliary information, a second representation of the events that is less noisy than the first representation, and, to output the events in accordance with the second representation.

In one type or impairments, the occurrence times of the events differ from respective times at which the EVS pixels are tuned to generate the events, by respective latency values that depend at least on luminance values to which the EVS pixels are exposed. To mitigate this type of impairments the processing logic generates the auxiliary information by estimating the latency values depending on the luminance values and generates the second representation by filtering the events depending on the estimated latency values. For example, the processing logic evaluates, based on the measured luminance levels, statistical properties of the latency values for one or more groups of the EVS pixels, and generates the auxiliary information for the EVS pixels in the one or more groups based on the respective statistical properties of the latency values in the one or more groups.

In an embodiment, the processing logic determines, based on the statistical properties, one or more temporal-spatial filters, and filters the events using the one or more temporal-spatial filters. The temporal-spatial filters may comprise, for example, linear filters.

In some embodiments, the processing logic filters the received events for improving accuracy of the occurrence times reported by the events. For example, the processing logic evaluates a mean latency value for one or more EVS pixels based on the measured luminance levels, and filters selected received events triggered by the one or more EVS pixels by modifying the occurrence times reported by the selected received events based on the mean latency value. As another example, the processing logic evaluates for one or more EVS pixels, based on the measured luminance levels, a Standard Deviation (STD) value of the latency values associated with the received events, determines a filter based on the evaluated STD latency value, and filters the received events triggered by the one or more EVS pixels using the determined filter, for producing a corresponding filtered event of the second representation.

In some embodiments, the processing logic is further configured to generate the auxiliary information based on a configuration of the auxiliary image sensor and of a camera system comprising the auxiliary image sensor, including at least one or more of (i) an exposure time of the auxiliary image sensor, (ii) a gain of the auxiliary image sensor, and (iii) an optical aperture of the camera system.

In mitigating another type of EVS impairments, the processing evaluates, based on the measured luminance levels, information indicative of expected rates of the events in one or more regions of the EVS pixels. The processing logic determines filters corresponding to the regions based on the respective expected rates, and filters the received events using the determined filters. In an example embodiment, the processing logic identifies a region in which the pixels are expected to produce no events, and filters out events that were triggered by the pixels belonging to the identified region.

In some embodiments, the processing logic outputs the events, in accordance with the second representation, via the interface, to a processor running a selected application. In such embodiments, the processing logic filters the received events, before being output, using a filter that is tailored to the selected application.

The functionality of the processing logic implementing the disclosed embodiments may be divided among various elements of a CV system. For example, in some embodiments, at least some functionality of the processing logic resides within the EVS comprising the plurality of EVS pixels.

In the disclosed techniques, an improved output representation of EVS events is generated based on auxiliary information related to measured luminance levels to which the EVS pixels are exposed. As one example, in mitigating timing inaccuracies, the auxiliary information may be indicative of statistical properties of event latencies. As another example, in mitigating false events due to dark noise, the auxiliary information may be indicative of regions of the EVS pixels in which no events are expected. To a CV processor receiving the EVS improved representation, the EVS appears as a high performance EVS. By using the disclosed embodiments, a CV processor receiving the improved representation may perform high-accuracy and efficient image processing that could not be achieved otherwise.

### SYSTEM DESCRIPTION

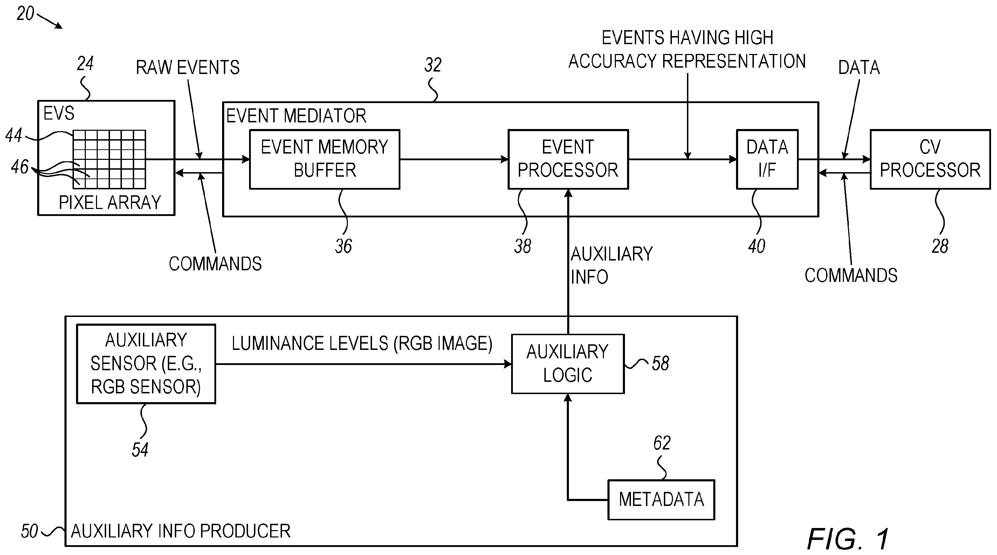

Fig. 1 is a block diagram that schematically illustrates an event-based Computer Vision (CV) system 20, in accordance with an embodiment that is described herein.

CV system 20 comprises an Event-based Vision Sensor (EVS) 24 coupled to a CV processor 28 via an event mediator 32. In some embodiments, event mediator 32 comprises an event memory buffer 36, an event processor 38 and a data interface 40. Event memory buffer 36 receives raw events from EVS 24 and stores them temporarily. Event processor 38 retrieves raw events from the event memory buffer as required, and processes them to produce a high accuracy representation of the events. The event processor sends the processed events via data interface 40 to any suitable entity such as CV processor 28.

Event processor 38 receives from CV processor 28 commands directed to managing the storage and retrieval of raw events to and from event memory buffer 36. Other types of commands comprise EVS commands, directed to configuring and controlling the operation of EVS 24 may be sent directly to the EVS, or via the event mediator.

CV system 20 may be used in various image and computer vision processing applications, and in particular in applications that involve motion scenes. Example relevant applications include visual inspection in food, medicine and cosmetic manufacturing, contaminant detection inspections in electronics manufacturing, machine abnormality detection in electronics manufacturing and in heavy industry and civil engineering, robotics, safety monitoring with consideration for privacy, e.g., at medical or long-term care sites, scientific measurement, and super-slow motion in mobile phones, to name a few. Event-based cameras benefit from high temporal resolution (e.g., a resolution of several microseconds between event frames, compared to tens of milliseconds in a typical RGB sensor), low latency, low power consumption and high dynamic range.

EVS 24 comprises a pixel array 44 comprising multiple pixel circuits 46 (also referred to herein simply as "pixels" as noted above). Pixels 46 may be arranged in any suitable geometrical configuration, such as, for example, in a 2D matrix. For example, pixel array 44 may comprise a 1280-by-720 matrix having approximately 0.92 Megapixels, a 640-by-512 matrix having approximately 0.32 Megapixels, or any other matrix or other suitable pixel array configuration.

Pixels 46 generate (raw) events depending on light stimulus and other parameters of the EVS. Each pixel 46 individually monitors the luminance level it perceives and triggers an event in response to detecting that the Log luminance level has changed by a specified luminance difference relative to a previous Log luminance level that caused triggering of the previous event. The specified luminance difference may be predefined, statically configurable, or adapted over time. For example, the luminance difference (threshold) may be adapted for achieving a required event rate.

The events triggered by pixels 46 typically comprise multiple event parameters, such as the occurrence time of the event, the position of the underlying pixel in pixel array 44 (e.g., specified by horizontal and vertical coordinates of the pixel in the pixel array), and a polarity value corresponding to increase or decrease of the luminance level that caused triggering the event.

In some embodiments, EVS 24 outputs each event immediately as it occurs. In other embodiments, EVS 24 outputs events in frames, each of which reporting no events (e.g., an empty frame), or one or more events that occurred within the frame duration.

EVS 24 may be coupled to event mediator 32 using any suitable interface (or interfaces). In some embodiments, the EVS receives EVS commands from the event mediator via a low-speed link or bus, such as, for example, the Inter-Integrated Circuit (I²C) bus, or via the Serial Peripheral Interface (SPI). In some embodiments, the EVS sends events to the event mediator via a high-speed link such as, for example, the Camera Serial Interface (CSI) specified by the Mobile Industry Processor Interface (MIPI) Alliance, e.g., a two-lane D-PHY supporting a bit rate of 1.5 Gbps per lane. Alternatively, the EVS may send events to the event mediator over the Sony Scalable Low Voltage Signaling - Embedded Clock) SLVS-EC interface, e.g., a four-lane interface supporting a bit rate of 800 Mbps per lane.

Event mediator 32 may be coupled to CV processor 28 using any suitable interface(s), e.g., similarly to the command and data interfaces used between the EVS and the event mediator, as described above. Alternatively, different types of interfaces may be used between the event mediator and each the EVS and CV processor.

In some embodiments, events triggered by pixels 46 report occurrence times that differ from ideal times at which the pixels are tuned to generate the events, by respective latency values. These latency values typically depend on the luminance levels to which pixels 46 generating the events are exposed and on the EVS specifications.

CV system 20 further comprises an auxiliary information producer 50, which comprise an auxiliary image sensor 54, and auxiliary logic 58. The auxiliary information producer measures luminance levels associated with the EVS pixels, and based on the luminance levels produces auxiliary information to be used by the event mediator for generating a representation of the events that is less noisy than the representation of the received raw events. In the description that follows the terms "auxiliary sensor" and "RGB sensor" are used interchangeably.

In some embodiments, to compensate for the dependence of the latency values (and therefore of the occurrence times reported by the events) on the luminance levels, auxiliary information producer 50 estimates luminance levels to which pixels 46 are exposed. In the present example auxiliary image sensor 54 comprises a Red-Green-Blue (RGB) sensor that measures or estimates the luminance levels associated with pixels 46 of the EVS. Alternatively, other types of image sensors or other devices measuring luminance can also be used. In one embodiment, the measured luminance levels correspond to individual pixels of EVS 24. Alternatively, at least some of estimated luminance levels correspond to respective groups of multiple pixels among the pixels of EVS 24.

A noted above, auxiliary image sensor (e.g., RGB sensor) 54 measures luminance levels corresponding to the pixel array of the EVS (partially or globally). To this end, the RGB sensor is configured to sense the same scene as the EVS. In some embodiments the EVS and the RGB sensor are integrated together. This allows simpler configuration, e.g., configuring a single aperture for both sensors.

Auxiliary logic 58 produces auxiliary information based on the measured luminance levels. In some embodiments, the auxiliary logic translates the measured luminance levels into latency information, which event processor 38 uses for processing the raw events, as will be described in detail below. In some embodiments, in deriving the latency information based on the luminance levels, auxiliary logic 58 produces the latency information (to be used, e.g., in filtering events) based on additional data, which may comprise, for example, configuration parameters of the analog and digital gains of RGB sensor 54, the RGB sensor exposure time, and the aperture of the EVS camera comprising RGB sensor 54. The configuration parameters may be provisioned beforehand and may be updated during operation of the CV system, as required.

In an embodiment, metadata 62 such as, for example, EVS specifications and information regarding the expected luminance values in the scene, may also be input to auxiliary logic 58. The auxiliary logic may use metadata 62 in deriving the latency information from the luminance levels, in an embodiment.

In some embodiments, auxiliary logic 58 evaluates, based on the measured luminance levels, information indicative of expected rates of the events in one or more regions of the EVS pixels. The EVS mediator determines filters corresponding to the regions based on the respective expected rates, and filters the received events using the determined filters. For example, the auxiliary logic identifies a region in which the pixels are expected to produce no events, and the event mediator filters out events that were triggered by the pixels belonging to the identified region. Other examples of using regions of the EVS pixels are described herein.

The events generated by pixels 46 typically occur due to moving edges in the scene, which in turn occur due to moving objects in the scene or moving of the EVS camera.

In some embodiments, auxiliary logic 58 identifies certain regions among the EVS pixels, based on the RGB image. In these embodiments, special processing may be applied to events generated by pixels belonging to these regions and other processing should be applied to all other events. In an example embodiment, the auxiliary logic detects contrast in regions (that could be generated along edges of one or more objects) in the RGB image (e.g., using any suitable edge detection method). In such embodiments, the auxiliary logic may produce luminance information only for pixels 46 associated with regions containing contrast (e.g. due to edges), thereby eliminating noisy events (which occur due to dark noise), as well as reducing processing load from both the auxiliary logic and the event processor and reducing the traffic bandwidth between them.

The structure of auxiliary information producer 50 in Fig. 1 is given by way of example, and other embodiments of an auxiliary information producer can also be used. For example, in some embodiments, the RGB sensor (or any other source) generates information that can be used for improving the representation of events generated by the EVS. In one example embodiment, the auxiliary information producer measures, using the RGB sensor, luminance levels (e.g., for regions of EVS pixels), as described above. Since the EVS is typically noisier than the RGB sensor, the output generated by RGB sensor is in some cases more reliable than that of the EVS, and therefore the output of the RGB sensor is useful in improving the representation of the EVS events.

The CV system configuration of Fig. 1 including EVS 24, CV processor 28, event mediator 32, and auxiliary information producer 50 are given by way of example, which are chosen purely for the sake of conceptual clarity. In alternative embodiments, other suitable CV system, CV processor, event mediator and auxiliary information producer configurations can also be used.

The division of functions among EVS 24, event mediator 32, auxiliary information producer 50 and CV processor 28 may differ from the division shown in Fig. 1. For example, EVS 24 and/or CV processor 28 may implement at least part of the functionality and storage space of event mediator 32 and/or auxiliary information producer 50. In general, processor(s) and other hardware logic implementing the disclosed embodiments are collectively referred to as "processing logic."

Some elements of event mediator 32, auxiliary information producer 50, or both, such as event processor 38, auxiliary sensor 54, auxiliary logic 58, may be implemented in hardware, e.g., in one or more Application-Specific Integrated Circuits (ASICs) or Field-Programmable Gate Arrays (FPGAs). Additionally or alternatively, some elements of event mediator 32 and/or auxiliary information producer 50 can be implemented using software, or using a combination of hardware and software elements.

In the CV system configuration shown in Fig. 1, EVS 24, event mediator 32, auxiliary information producer 50 and CV processor 28 are implemented as separate Integrated Circuits (ICs). In alternative embodiments, however, EVS 24, event mediator 32, auxiliary information producer 50 and CV processor 28 may be integrated on separate semiconductor dies in a single Multi-Chip Package (MCP) or System on Chip (SoC), and may be interconnected by internal buses. Alternatively, other distributions of EVS 24, event mediator 32, auxiliary information producer 50 and CV processor 28 into ICs can also be used. In some embodiments, EVS 24 and RGB sensor 54 are integrated together.

In some embodiments, some of the functions of event mediator 32 and/or auxiliary information producer 50 may be carried out by one or more general-purpose processors, e.g., event processor 38, and/or one or more processors implementing auxiliary information producer 50 the processor (s) are programmed in software to carry out the functions described herein. The software may be downloaded to the relevant processor(s) in electronic form, over a network, for example, or it may, alternatively or additionally, be provided and/or stored on non-transitory tangible media, such as magnetic, optical, or electronic memory.

Event memory buffer 36 may comprise any suitable type of memory, such as, for example, a volatile memory such as a Random Access Memory (RAM), a nonvolatile storage such as a Flash memory, or a combination of two or more memory devices of different respective technologies.

Elements that are not necessary for understanding the principles of the present disclosure, such as various interfaces, addressing circuits, timing and sequencing circuits and debugging circuits, have been omitted from the figure for clarity.

### METHODS FOR COMPENSATING FOR EVS IMPAIRMENTS

As noted above, the occurrence times of events generated by pixels 46 of EVS 24 typically differ from the ideal times at which the pixels are tuned to generate the events, by respective latency values. The latency values may be modeled as a random variable whose distribution is characterized, for example, by a mean latency value and a latency variance or Standard Deviation (STD) value. In alternative embodiments, higher statistical attributes can also be used.

In some embodiments, the mean latency value and STD latency value depend on the luminance levels to which the pixels generating the events are exposed. For example, for a given pixel, the mean latency value and the STD latency value typically increase with decreasing the luminance level, and *vice versa.*

The latency values of events related to a common luminance value have inherent randomness that affect the occurrence times assigned to the events. Moreover, the dependence of the statistical properties of the latency values on the luminance levels should also be taken into consideration for improving the output representation.

In some embodiments, event processor 38 produces the output representation by applying one or more filters to the events received from EVS 24. In some embodiments the filter is fixed over the entire pixel array of EVS 24. In other embodiments, the filter dynamically changes over time and/or over the spatial domains.

A filtered event comprises at least a timestamp of the filtered event and a filtered value. The filtered events comprise the output representation. In alternative embodiments, the output representation does not include explicit timestamp values. In some embodiments, the filtered events comprise modified replicas of the received events. In this case, the output representation comprises events formatted similarly to the events received from the EVS, including the (t, x, y, p) parameters. In such embodiments, the filtered events comprising the output representation have the same (or similar) formatting as the raw events. In other embodiments, the filtered events comprise counters representing the average or sum of events over the period of aggregated time, as will be described below.

In applying one type of a filter (e.g., an aggregation filter), the event processor aggregates information of multiple events along a time window having a window length.

By applying the aggregation filter, multiple events are represented by a single filtered event, thereby considerably reducing the amount of event data delivered to the CV processor. In addition, the aggregation filter performs as a low-pass filter or a smoothing filter, meaning that the timestamps assigned to the filtered events are much less noisy than the occurrence times of the raw events.

When the aggregation filter has a fixed window length, the smoothness impact of the filter may vary with the luminance levels. In some embodiments, for achieving a fixed (or close to fixed) smoothness effect over time, the luminance levels to which the pixels are exposed are taken into consideration in determining the window length, as described herein.

In some embodiments, auxiliary information producer 50 evaluates (e.g., using auxiliary logic 58), based on the luminance levels measured by the RGB sensor, statistical properties of the latency values for one or more EVS pixels, and generates the auxiliary information based on the statistical properties. In such embodiments, event mediator 32 determines, based on the statistical properties, one or more temporal-spatial filters, and filters the received events using the one or more temporal-spatial filters. In an embodiment, at least one of the temporal-spatial filters comprises a linear filter. In another embodiment, at least one of the temporal-spatial filters comprises a sliding window filter. In the present context, a "temporal-spatial filter" refers to a filter that spans over time (such as one or more frames), and over multiple pixels in each frame. The temporal-spatial filter may be fixed over time or modified adaptively over time.

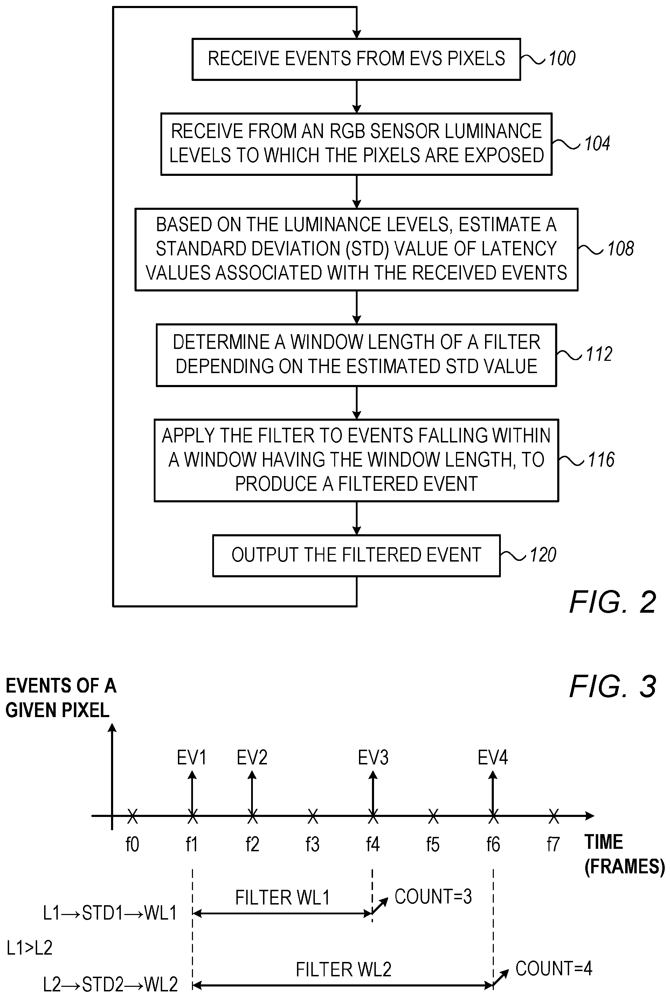

Fig. 2 is a flow chart that schematically illustrates a method for filtering events depending on luminance levels, in accordance with an embodiment that is described herein.

The method will be described as executed by elements of event mediator 32 and auxiliary information producer 50.

The method begins at an event reception step 100, with event mediator 32 receiving events triggered by pixels 46 of EVS 24. In the present example, the event mediator receives the events in frames, each of which containing no events (an empty frame) or one or more events belonging to the frame interval.

At a luminance levels reception step 104, auxiliary logic 58 receives from RGB sensor 54 measured luminance levels to which pixels 46 of EVS 24 are exposed. Each of the luminance levels may be associated with a single pixel 46 or with a group of multiple (e.g., neighboring) pixels.

At a latency STD estimation step 108, auxiliary logic 58 evaluates a STD latency value of latency values associated with the received events. The estimated STD latency value may correspond to a single pixel 46 or to a group of multiple pixels (e.g., a region of pixels) belonging to a given frame. In an embodiment, the auxiliary logic converts the luminance levels measured by the RGB sensor to respective STD latency values using a predefined function or lookup table. In some embodiments, in determining the STD latency values, color information of the RGB sensor is also considered. For example, the RGB output may be converted into a YUV or monochrome representation.

At a window length determination step 112, the event mediator determines a window length of an aggregation filter depending on the STD latency value estimated at step 108, e.g., using any suitable function or a lookup table. In an embodiment, the event mediator determines the window length so that the window length increases with increasing the STD latency value, and *vice versa.* The window length may be specified, for example, by a respective time interval, or by the number of event frames contained in the window.

It is noted that in some embodiments the window length may be determined directly from the luminance levels of the RGB sensor, without explicitly estimating the STD luminance value.

At a filtering step 116, the event mediator applies the aggregation filter to events falling within a window having the window length, to produce a filtered event. In some embodiments, the event mediator applies the aggregation filter to events within the window that were triggered by a given pixel, or alternatively to events triggered by multiple pixels.

At step 116, the event mediator may apply any suitable type of filter. In one embodiment, the filter counts the number of events triggered within the window. In this case the filtered event reports at least a time associated with the underlying window and the count value. The aggregation filter may have a common count or separate counts for counting events of both positive and negative polarity values. In another embodiment, the aggregation filter sums the polarity values of the events triggered within the window. In this case the filtered event reports at least a time associated with the window, and the sum value of the polarity values.

At an output step 120, the event mediator outputs the filtered event to CV processor 28 via data interface 40. The method then loops back to step 100 to receive subsequent events from EVS 24.

In some embodiments, the filtering applied by the event mediator (e.g., as at step 116) is carried out over the spatial domain, e.g., generating a single filtered value involves multiple pixels in each frame. In an embodiment, the filtering (e.g., as at step 116) is implemented as a linear window. In such an embodiment, the filter continuously outputs filtered values as EVS events are coming in. It is also noted that some types of filters may require event buffering.

The method in Figure 2 is described, for the sake of conceptual clarity, as a loop of multiple steps, wherein in each loop iteration events are received and then filtered. In practical implementations, however, the method of Fig. 2 may be executed using a background process and a foreground process. The background process constantly decides on the filter type to be used, according to estimated luminance levels received from the RGB sensor (e.g., steps 100-112). The foreground process filters the events using the filter determined by the background process (e.g., steps 116 and 120). In one embodiment, the input data to each process can be done by dividing the data into chunks, and process each chunk separately. In other embodiments, processing of the data is done in 'sliding-window'

Fig. 3 is a diagram that schematically illustrates events triggered by a given pixel, and example filter window lengths determined depending on estimated luminance levels, in accordance with an embodiment that is described herein.

In the diagram, the horizontal axis represents a time axis divided into frames by 'X' symbols. In this example, the frames are denoted f0...f7. At each frame, the given pixel (e.g., a pixel 46 of EVS 24) may generate an event or otherwise skip generating an event. The active events are depicted as up-pointing vertical arrows. In the example of Fig. 3, the given pixel generates events denoted EV1, EV2, EV3 and EV4 at respective frames f1, f2, f4 and f6.

Let L1 and L2 denote luminance levels to which the given pixel may be exposed, as estimated, for example, by RGB sensor 54. It is also assumed that the luminance level L1 is larger than L2. For luminance levels L1 and L2, the auxiliary information producer estimates respective STD latency values denoted STD1 and STD2, which translate (e.g., by auxiliary logic 58) to window lengths denoted WL1 and WL2. As seen in the figure, since L1>L2, STD1<STD2 and therefore window WL1 is shorter than window WL2.

In the present example, the filter of length WL1 outputs a count value 3, and the filter of length WL2 outputs a count value 4. The occurrence times of the filtered events may be determined to the mid-filter times, for example.

### METHODS FOR CORRECTING EVENT OCCURANCE TIMES

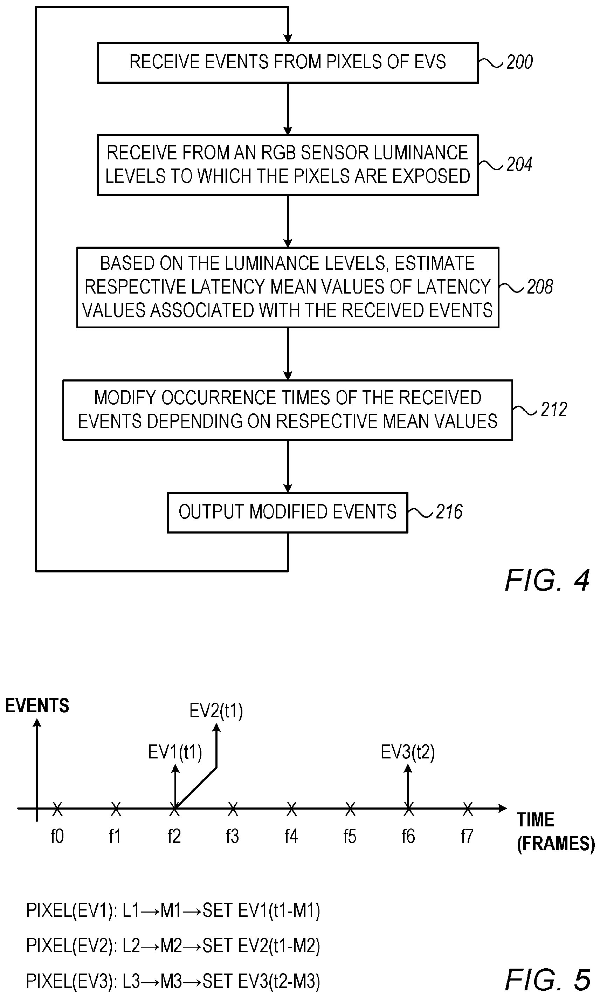

Fig. 4 is a flow chart that schematically illustrates a method for correcting occurrence times of events, in accordance with an embodiment that is described herein.

The method will be described as executed by elements of event mediator 32 and auxiliary information producer 50.

The method begins at an event reception step 200, with event mediator 32 receiving events triggered by pixels 46 of EVS 24. In the present example, the event mediator receives the events in frames, each of which containing no events (an empty frame) or one or more events belonging to the frame interval.

At a luminance levels reception step 204, auxiliary logic 58 receives from RGB sensor 54 measured luminance levels to which pixels 46 of EVS 24 are exposed. Each of the luminance levels may be associated with a single pixel 46 or with a group of multiple (e.g., neighboring) pixels 46.

At a mean latency value estimation step 208, auxiliary logic 58 evaluates a mean latency value of the latency values associated with the received events. The estimated mean latency value may correspond to a given pixel 46 in a given frame, or to a group of multiple pixels 46 belonging to the given frame. The estimated mean latency value is provided to event mediator 32. In an embodiment, the auxiliary logic converts luminance levels to respective mean latency values using a predefined function or lookup table.

At a timing correction step 212, event processor 38 modifies the occurrence time of the received event triggered by the given pixel, or multiple occurrence times of the received events triggered by the multiple pixels in the given frame, depending on the mean latency value estimated at step 208.

At an output step 216, the event mediator outputs the events having the corrected occurrence times. Following step 216 the method loops back to step 200 to receive subsequent events from EVS 24.

Fig. 5 is a diagram that schematically illustrates events whose occurrence times are corrected depending on estimated luminance levels, in accordance with an embodiment that is described herein. The axes used in the diagram are similar to the axes of the diagram of Fig. 3 above.

In the diagram, raw events (e.g., received from EVS 24) denoted EV1 and EV2 having respective occurrence times denoted t1 and t2 are triggered by respective pixels at a frame denoted f2, and another raw event denoted EV3 having an occurrence time denoted t2 is triggered by some pixel at a frame denoted f6. The pixels triggering EV1, EV2 and EV3 are exposed to respective luminance levels denoted L1, L2, and L3, as estimated, e.g., by the RGB sensor (54). The auxiliary logic (58) translates these luminance levels to respective mean latency values denoted M1, M2 and M3. Based on the mean latency values, the event processor (38) corrects the occurrence times of the raw events to EV1(t1-M1), EV2(t1-M2) and EV3(t2-M3).

In the example above, events with corrected timestamps may be sent to the CV processor out of order. In some embodiments, for outputting events in the correct order, the events are first buffered (e.g., in event memory buffer 36), and sent from the buffer in the correct order.

In some embodiments, event timestamps are shifted according to worst case conditions of delay. In such embodiments, at the lowest luminance level, no timestamps are corrected, and at the highest luminance level, a maximum delay is added.

The embodiments described above are given by way of example, and other suitable embodiments can also be used. For example, although in the embodiments above the event processor applies one of multiple available event filters (e.g., event aggregation as in Fig. 2, correction of occurrence times as in Fig. 4), in alternative embodiments, the event processor may apply to the events both types of filters.

In the embodiments described above the events are mainly processed by a suitable filter that is implemented within the event mediator. In alternative embodiments, however, the processing logic outputs the filtered events to a processor running a selected application, and filters the events using a filter that depends on (or tailored to) the selected application. In some embodiments, the filter is part of a neural network.

Although the embodiments described herein mainly address generation of improved (e.g., reduced noise) representation of EVS events, the methods and systems described herein can also be used in other applications, such as in application based on any vision sensor that outputs data in some representation whose quality can be improved based on inputs from another sensor.

## Claims

1. A system comprising:
an auxiliary image sensor (54), configured to measure luminance levels associated with a plurality of Event-based Vision Sensor, EVS, pixels (46); and
processing logic (38, 58), configured to:
generate based on the measured luminance levels auxiliary information related to impairments in triggering events by the plurality of EVS pixels (46);
receive events triggered by the plurality of EVS pixels (46), the events are representable using a first representation being noisy due to the impairments;
generate, based on the auxiliary information, a second representation of the events that is less noisy than the first representation; and
output the events in accordance with the second representation;
wherein the occurrence times of the events differ from respective times at which the EVS pixels (46) are tuned to generate the events, by respective latency values that depend at least on luminance values to which the EVS pixels (46) are exposed,
**characterized in that** the processing logic (38, 58) is configured to generate the auxiliary information by estimating the latency values depending on the luminance values, and to generate the second representation by filtering the events depending on the estimated latency values.

2. The system according to claim 1, wherein the processing logic (38, 58) is configured to evaluate, based on the measured luminance levels, statistical properties of the latency values for one or more groups of the EVS pixels (46), and to generate the auxiliary information for the EVS pixels (46) in the one or more groups based on the respective statistical properties of the latency values in the one or more groups.

3. The system according to claim 2, wherein the processing logic (38, 58) is configured to determine, based on the statistical properties, one or more temporal-spatial filters, and to filter the events using the one or more temporal-spatial filters;
in particular wherein at least one of the temporal-spatial filters comprises a linear filter.

4. The system according to claim 1, wherein the processing logic (38, 58) is configured to filter the received events for improving accuracy of the occurrence times reported by the events.

5. The system according to claim 1, wherein the processing logic (38, 58) is configured to evaluate a mean latency value for one or more EVS pixels (46) based on the measured luminance levels, and to filter selected received events triggered by the one or more EVS pixels (46) by modifying the occurrence times reported by the selected received events based on the mean latency value; or
wherein the processing logic (38, 58) is configured to evaluate for one or more EVS pixels (46), based on the measured luminance levels, a Standard Deviation, STD, value of the latency values associated with the received events, to determine a filter based on the evaluated STD latency value, and to filter the received events triggered by the one or more EVS pixels (46) using the determined filter, for producing a corresponding filtered event of the second representation.

6. The system according to claim 1, wherein the processing logic (38, 58) is further configured to generate the auxiliary information based on a configuration of the auxiliary image sensor (54) and of a camera system comprising the auxiliary image sensor (54), including at least one or more of (i) an exposure time of the auxiliary image sensor (54), (ii) a gain of the auxiliary image sensor (54), and (iii) an optical aperture of the camera system.

7. The system according to claim 1, wherein the processing logic (38, 58) is configured to evaluate, based on the measured luminance levels, information indicative of expected rates of the events in one or more regions of the EVS pixels (46), to determine filters corresponding to the regions based on the respective expected rates, and to filter the received events using the determined filters;
in particular wherein the processing logic (38, 58) is configured to identify a region in which the pixels (46) are expected to produce no events, and to filter out events that were triggered by the pixels (46) belonging to the identified region.

8. The system according to claim 1, wherein the processing logic (38, 58) is configured to output the events, in accordance with the second representation, via an interface (40), to a processor (28) running a selected application, and to filter the received events, before being output, using a filter that is tailored to the selected application; or
wherein at least some functionality of the processing logic (38, 58) resides within the EVS (24) comprising the plurality of EVS pixels (46).

9. A method comprising:
measuring by an auxiliary image sensor (54), luminance levels associated with a plurality of Event-based Vision Sensor, EVS, pixels (46);
generating based on the measured luminance levels auxiliary information related to impairments in triggering events by the plurality of EVS pixels (46);
receiving events triggered by the plurality of EVS pixels (46), the events are representable using a first representation being noisy due to the impairments;
generating, based on the auxiliary information, a second representation of the events that is less noisy than the first representation; and
outputting the events in accordance with the second representation;
wherein the occurrence times of the events differ from respective times at which the EVS pixels (46) are tuned to generate the events, by respective latency values that depend at least on luminance values to which the EVS pixels (46) are exposed,
charcterized in that generating the auxiliary information comprises estimating the latency values depending on the luminance values, and wherein generating the second representation comprises filtering the events depending on the estimated latency values.

10. The method according to claim 9, wherein generating the auxiliary information comprises evaluating, based on the measured luminance levels, statistical properties of the latency values for one or more groups of the EVS pixels (46), and generating the auxiliary information for the EVS pixels (46) in the one or more groups based on the respective statistical properties of the latency values in the one or more groups.

11. The method according to claim 10, and comprising determining, based on the statistical properties, one or more temporal-spatial filters, and filtering the events using the one or more temporal-spatial filters;
in particular wherein at least one of the temporal-spatial filters comprises a linear filter.

12. The method according to claim 9, wherein filtering the events comprises filtering the received events for improving accuracy of the occurrence times reported by the events; or
wherein generating the auxiliary information comprises evaluating a mean latency value for one or more EVS pixels (46) based on the measured luminance levels, and wherein filtering the events comprises filtering selected received events triggered by the one or more EVS pixels (46) by modifying the occurrence times reported by the selected received events based on the mean latency value; or
wherein generating the auxiliary information comprises evaluating for one or more EVS pixels (46), based on the measured luminance levels, a Standard Deviation, STD, value of the latency values associated with the received events, and wherein filtering the events comprises determining a filter based on the evaluated STD latency value, and filtering the received events triggered by the one or more EVS pixels (46) using the determined filter, for producing a corresponding filtered event of the second representation.

13. The method according to claim 9, wherein generating the auxiliary information comprises generating the auxiliary events based on a configuration of the auxiliary image sensor (54) and of a camera system comprising the auxiliary image sensor (54), including at least one or more of (i) an exposure time of the auxiliary image sensor (54), (ii) a gain of the auxiliary image sensor (54), and (iii) an optical aperture of the camera system.

14. The method according to claim 9, wherein generating the auxiliary information comprises evaluating, based on the measured luminance levels, information indicative of expected rates of the events in one or more regions of the EVS pixels (46), and wherein generating the second representation comprises determining filters corresponding to the regions based on the respective expected rates, and filtering the received events using the determined filters;
in particular wherein generating the second representation comprises identifying a region in which the pixels (46) are expected to produce no events, and filtering out events that were triggered by the pixels (46) belonging to the identified region.

15. The method according to claim 9, and comprising outputting the events, in accordance with the second representation, via an interface (40), to a processor (28) running a selected application, and filtering the received events, before being output, using a filter that is tailored to the selected application.

## Patentansprüche

1. System, umfassend:
einen Hilfsbildsensor (54), der konfiguriert ist, um die Luminanzwerte, die mit einer Vielzahl von Pixeln (46) des ereignisbasierten Bildsensors, EVS, verknüpft sind, zu messen; und
eine Verarbeitungsschaltung (38, 58), die konfiguriert ist zum:
Generieren von Hilfsinformationen bezüglich Beeinträchtigungen bei der Auslösung von Ereignissen durch die Vielzahl der EVS-Pixel (46) basierend auf den gemessenen Luminanzwerten;
Empfangen von Ereignissen, die durch die Vielzahl der EVS-Pixel (46) ausgelöst werden, wobei die Ereignisse unter Verwendung einer ersten Darstellung darstellbar sind, die aufgrund der Beeinträchtigungen verrauscht ist;
Generieren, basierend auf den Hilfsinformationen, einer zweiten Darstellung der Ereignisse, die weniger verrauscht ist als die erste Darstellung; und
Ausgeben der Ereignisse gemäß der zweiten Darstellung;
wobei die Zeitpunkte des Auftretens der Ereignisse von den jeweiligen Zeitpunkten, zu denen die EVS-Pixel (46) zum Generieren der Ereignisse eingestellt werden, um jeweilige Latenzwerte abweichen, die mindestens von den Luminanzwerten abhängen, denen die EVS-Pixel (46) ausgesetzt sind,
**dadurch gekennzeichnet, dass** die Verarbeitungsschaltung (38, 58) konfiguriert ist, um die Hilfsinformationen durch Schätzen der Latenzwerte in Abhängigkeit von den Luminanzwerten zu generieren, und die zweite Darstellung durch Filtern der Ereignisse in Abhängigkeit von den geschätzten Latenzwerten zu generieren.

2. System nach Anspruch 1, wobei die Verarbeitungsschaltung (38, 58) konfiguriert ist, um basierend auf den gemessenen Luminanzwerten statistische Eigenschaften der Latenzwerte für eine oder mehrere Gruppen der EVS-Pixel (46) zu evaluieren, und basierend auf den jeweiligen statistischen Eigenschaften der Latenzwerte in der einen oder den mehreren Gruppen die Hilfsinformationen für die EVS-Pixel (46) zu generieren.

3. System nach Anspruch 2, wobei die Verarbeitungsschaltung (38, 58) konfiguriert ist, um basierend auf den statistischen Eigenschaften einen oder mehrere zeitlich-räumliche Filter zu bestimmen und die Ereignisse mithilfe des oder der mehreren zeitlich-räumlichen Filter zu filtern;
insbesondere wobei mindestens einer der zeitlich-räumlichen Filter einen linearen Filter umfasst.

4. System nach Anspruch 1, wobei die Verarbeitungsschaltung (38, 58) konfiguriert ist, um die empfangenen Ereignisse zu filtern, um die Genauigkeit der von den Ereignissen gemeldeten Zeitpunkte des Auftretens zu verbessern.

5. System nach Anspruch 1, wobei die Verarbeitungsschaltung (38, 58) konfiguriert ist, um einen mittleren Latenzwert für ein oder mehrere EVS-Pixel (46) basierend auf den gemessenen Luminanzwerten zu evaluieren und ausgewählte empfangene Ereignisse, die von dem oder den EVS-Pixeln (46) ausgelöst werden, zu filtern, indem die von den ausgewählten empfangenen Ereignissen gemeldeten Zeitpunkte des Auftretens basierend auf dem mittleren Latenzwert geändert werden; oder
wobei die Verarbeitungsschaltung (38, 58) konfiguriert ist, um für ein oder mehrere EVS-Pixel (46) basierend auf den gemessenen Luminanzwerten einen Standardabweichungswert, STD-Wert, der Latenzwerte, die mit den empfangenen Ereignissen verknüpft sind, zu evaluieren, um einen Filter basierend auf dem evaluierten STD-Latenzwert zu bestimmen, und die von dem einen oder den mehreren EVS-Pixel(n) (46) ausgelösten empfangenen Ereignisse mithilfe des bestimmten Filters zu filtern, um ein entsprechendes gefiltertes Ereignis der zweiten Darstellung zu erzeugen.

6. System nach Anspruch 1, wobei die Verarbeitungsschaltung (38, 58) ferner konfiguriert ist, um die Hilfsinformationen basierend auf einer Konfiguration des Hilfsbildsensors (54) und eines Kamerasystems, das den Hilfsbildsensor (54) umfasst, zu generieren, einschließlich mindestens einer oder mehrerer der folgenden Größen: (i) eine Belichtungszeit des Hilfsbildsensors (54), (ii) eine Verstärkung des Hilfsbildsensors (54) und (iii) eine optische Blendenöffnung des Kamerasystems.

7. System nach Anspruch 1, wobei die Verarbeitungsschaltung (38, 58) konfiguriert ist, um basierend auf den gemessenen Luminanzwerten Informationen über die zu erwartenden Ereignisraten in einem oder mehreren Bereichen der EVS-Pixel (46) zu evaluieren, um Filter entsprechend den Bereichen basierend auf den jeweiligen zu erwartenden Raten zu bestimmen und die empfangenen Ereignisse mithilfe der bestimmten Filter zu filtern;
insbesondere wobei die Verarbeitungsschaltung (38, 58) konfiguriert ist, um einen Bereich zu identifizieren, in dem die Pixel (46) voraussichtlich keine Ereignisse erzeugen, und Ereignisse herauszufiltern, die von den Pixeln (46) ausgelöst wurden, die zu dem identifizierten Bereich gehören.

8. System nach Anspruch 1, wobei die Verarbeitungsschaltung (38, 58) konfiguriert ist, um die Ereignisse gemäß der zweiten Darstellung über eine Schnittstelle (40) an einen Prozessor (28) auszugeben, auf dem eine ausgewählte Anwendung ausgeführt wird, und die empfangenen Ereignisse vor der Ausgabe mit einem auf die ausgewählte Anwendung zugeschnittenen Filter zu filtern; oder
wobei mindestens ein Teil der Funktionalität der Verarbeitungsschaltung (38, 58) innerhalb des EVS (24) liegt, das die Vielzahl der EVS-Pixel (46) umfasst.

9. Verfahren, umfassend:
Messen der Luminanzwerte, die mit einer Vielzahl von Pixeln (46) des ereignisbasierten Bildsensors, EVS, verknüpft sind, mittels eines Hilfsbildsensors (54);
Generieren von Hilfsinformationen bezüglich Beeinträchtigungen bei der Auslösung von Ereignissen durch die Vielzahl der EVS-Pixel (46), basierend auf den gemessenen Luminanzwerten;
Empfangen von Ereignissen, die durch die Vielzahl der EVS-Pixel (46) ausgelöst werden, wobei die Ereignisse mittels einer ersten Darstellung darstellbar sind, die aufgrund der Beeinträchtigungen verrauscht ist;
Generieren, basierend auf den Hilfsinformationen, einer zweiten Darstellung, die weniger verrauscht ist als die erste Darstellung; und
Ausgeben der Ereignisse gemäß der zweiten Darstellung;
wobei die Zeitpunkte des Auftretens der Ereignisse von den jeweiligen Zeitpunkten, zu denen die EVS-Pixel (46) zum Generieren der Ereignisse eingestellt werden, um jeweilige Latenzwerte abweichen, die mindestens von den Luminanzwerten abhängen, denen die EVS-Pixel (46) ausgesetzt sind,
**dadurch gekennzeichnet, dass** das Generieren der Hilfsinformationen das Schätzen der Latenzwerte in Abhängigkeit von den Luminanzwerten umfasst, und wobei das Generieren der zweiten Darstellung das Filtern der Ereignisse in Abhängigkeit von den geschätzten Latenzwerten umfasst.

10. Verfahren nach Anspruch 9, wobei das Generieren der Hilfsinformationen das Evaluieren statistischer Eigenschaften der Latenzwerte für eine oder mehrere Gruppen der EVS-Pixel (46) basierend auf den gemessenen Luminanzwerten, und das Generieren der Hilfsinformationen für die EVS-Pixel (46) in der einen oder mehreren Gruppen basierend auf den jeweiligen statistischen Eigenschaften der Latenzwerte in der einen oder den mehreren Gruppen umfasst.

11. Verfahren nach Anspruch 10, und umfassend das Bestimmen eines oder mehrerer zeitlich-räumlicher Filter basierend auf den statistischen Eigenschaften, und das Filtern der Ereignisse mittels des einen oder der mehreren zeitlich-räumlichen Filter;
insbesondere wobei mindestens einer der zeitlich-räumlichen Filter einen linearen Filter umfasst.

12. Verfahren nach Anspruch 9, wobei das Filtern der Ereignisse das Filtern der empfangenen Ereignisse zur Verbesserung der Genauigkeit der von den Ereignissen gemeldeten Zeitpunkte des Auftretens umfasst; oder
wobei das Generieren der Hilfsinformationen das Evaluieren eines mittleren Latenzwertes für ein oder mehrere EVS-Pixel (46) basierend auf den gemessenen Luminanzwerten umfasst, und wobei das Filtern der Ereignisse das Filtern ausgewählter empfangener Ereignisse umfasst, die von dem einen oder den mehreren EVS-Pixel(n) (46) ausgelöst wurden, indem die von den ausgewählten empfangenen Ereignissen gemeldeten Zeitpunkte des Auftretens basierend auf dem mittleren Latenzwert modifiziert werden; oder
wobei das Generieren der Hilfsinformationen das Evaluieren eines Standardabweichungswertes, STD-Wert, der Latenzwerte der empfangenen Ereignisse für ein oder mehrere EVS-Pixel (46) basierend auf den gemessenen Luminanzwerten umfasst, und das Filtern der Ereignisse das Bestimmen eines Filters basierend auf dem ausgewerteten STD-Latenzwert, und das Filtern der von dem einen oder den mehreren EVS-Pixel(n) (46) ausgelösten empfangenen Ereignisse unter Verwendung des bestimmten Filters umfasst, um ein entsprechendes gefiltertes Ereignis der zweiten Darstellung zu erzeugen.

13. Verfahren nach Anspruch 9, wobei das Generieren der Hilfsinformationen das Generieren der Hilfsereignisse basierend auf einer Konfiguration des Hilfsbildsensors (54) und eines Kamerasystems umfasst, das den Hilfsbildsensor (54) umfasst, einschließlich mindestens einer oder mehrerer der folgenden Konfigurationen: (i) eine Belichtungszeit des Hilfsbildsensors (54), (ii) eine Verstärkung des Hilfsbildsensors (54) und (iii) eine optische Blendenöffnung des Kamerasystems.

14. Verfahren nach Anspruch 9, wobei das Generieren der Hilfsinformationen das Evaluieren von Informationen basierend auf den gemessenen Luminanzwerten, die auf die zu erwartenden Ereignisraten in einem oder mehreren Bereichen der EVS-Pixel (46) hinweisen, und wobei das Generieren der zweiten Darstellung das Bestimmen von Filtern umfasst, die den Bereichen basierend auf den jeweiligen zu erwartenden Raten entsprechen, und das Filtern der empfangenen Ereignisse unter Verwendung der bestimmten Filter umfasst;
insbesondere wobei das Generieren der zweiten Darstellung das Identifizieren eines Bereichs umfasst, in dem die Pixel (46) voraussichtlich keine Ereignisse erzeugen, und das Herausfiltern von Ereignissen, die von den zu diesem identifizierten Bereich gehörenden Pixeln (46) ausgelöst wurden.

15. Verfahren nach Anspruch 9, und umfassend das Ausgeben der Ereignisse gemäß der zweiten Darstellung über eine Schnittstelle (40) an einen Prozessor (28), auf dem eine ausgewählte Anwendung ausgeführt wird, und das Filtern der empfangenen Ereignisse vor dem Ausgeben mittels eines auf die ausgewählte Anwendung zugeschnittenen Filters.

## Revendications

1. Système comprenant :
un capteur d'image auxiliaire (54), configuré pour mesurer des niveaux de luminance associés à une pluralité de pixels de capteur de vision en fonction d'événement, EVS (46) ; et
une logique de traitement (38, 58), configurée pour :
générer en fonction des niveaux de luminance mesurés des informations auxiliaires apparentées à des dégradations dans des événements déclencheurs par la pluralité de pixels EVS (46) ;
recevoir des événements déclenchés par la pluralité de pixels EVS (46), les événements peuvent être représentés à l'aide d'une première représentation étant bruitée en raison des dégradations ;
générer, en fonction des informations auxiliaires, une seconde représentation des événements qui est moins bruitée que la première représentation ; et
délivrer en sortie les événements conformément à la seconde représentation ;
dans lequel les temps d'occurrence des événements diffèrent de temps respectifs auxquels les pixels EVS (46) sont ajustés pour générer les événements, par des valeurs de latence respectives qui dépendent au moins de valeurs de luminance auxquelles les pixels EVS (46) sont exposés,
**caractérisé en ce que** la logique de traitement (38, 58) est configurée pour générer les informations auxiliaires en estimant les valeurs de latence en dépendance des valeurs de luminance, et pour générer la seconde représentation par filtrage des événements en dépendance des valeurs de latence estimées.

2. Système selon la revendication 1, dans lequel la logique de traitement (38, 58) est configurée pour évaluer, en fonction des niveaux de luminance mesurés, des propriétés statistiques des valeurs de latence pour un ou plusieurs groupes des pixels EVS (46), et pour générer les informations auxiliaires pour les pixels EVS (46) dans le ou les groupes en fonction des propriétés statistiques respectives des valeurs de latence dans le ou les groupes.

3. Système selon la revendication 2, dans lequel la logique de traitement (38, 58) est configurée pour déterminer, en fonction des propriétés statistiques, un ou plusieurs filtres spatio-temporels, et pour filtrer les événements à l'aide du ou des filtres spatio-temporels ;
en particulier dans lequel au moins l'un des filtres spatio-temporels comprend un filtre linéaire.

4. Système selon la revendication 1, dans lequel la logique de traitement (38, 58) est configurée pour filtrer les événements reçus pour améliorer la précision des temps d'occurrence rapportés par les événements.

5. Système selon la revendication 1, dans lequel la logique de traitement (38, 58) est configurée pour évaluer une valeur de latence moyenne pour un ou plusieurs pixels EVS (46) en fonction des niveaux de luminance mesurés, et pour filtrer des événements reçus sélectionnés déclenchés par le ou les pixels EVS (46) en modifiant les temps d'occurrence rapportés par les événements reçus sélectionnés en fonction de la valeur de latence moyenne ; ou
dans lequel la logique de traitement (38, 58) est configurée pour évaluer pour un ou plusieurs pixels EVS (46), en fonction des niveaux de luminance mesurés, une valeur d'écart-type, STD, des valeurs de latence associées aux événements reçus, pour déterminer un filtre en fonction de la valeur de latence STD évaluée, et pour filtrer les événements reçus déclenchés par le ou les pixels EVS (46) à l'aide du filtre déterminé, pour produire un événement filtré correspondant de la seconde représentation.

6. Système selon la revendication 1, dans lequel la logique de traitement (38, 58) est configurée en outre pour générer les informations auxiliaires en fonction d'une configuration du capteur d'image auxiliaire (54) et d'un système de caméra comprenant le capteur d'image auxiliaire (54), comportant au moins un ou plusieurs parmi (i) un temps d'exposition du capteur d'image auxiliaire (54), (ii) un gain du capteur d'image auxiliaire (54), et (iii) une ouverture optique du système de caméra.

7. Système selon la revendication 1, dans lequel la logique de traitement (38, 58) est configurée pour évaluer, en fonction des niveaux de luminance mesurés, des informations indiquant des fréquences attendues des événements dans une ou plusieurs régions des pixels EVS (46), pour déterminer des filtres correspondant aux régions en fonction des fréquences attendues respectives, et pour filtrer les événements reçus à l'aide des filtres déterminés ;
en particulier dans lequel la logique de traitement (38, 58) est configurée pour identifier une région dans laquelle les pixels (46) sont censés ne produire aucun événement, et pour éliminer par filtrage des événements qui ont été déclenchés par les pixels (46) appartenant à la région identifiée.

8. Système selon la revendication 1, dans lequel la logique de traitement (38, 58) est configurée pour délivrer en sortie les événements, conformément à la seconde représentation, par l'intermédiaire d'une interface (40), à un processeur (28) exécutant une application sélectionnée, et pour filtrer les événements reçus, avant d'être sortis, à l'aide d'un filtre qui est adapté à l'application sélectionnée ; ou
dans lequel au moins une certaine fonctionnalité de la logique de traitement (38, 58) se trouve dans l'EVS (24) comprenant la pluralité de pixels EVS (46).

9. Procédé comprenant :
la mesure par un capteur d'image auxiliaire (54), de niveaux de luminance associés à une pluralité de pixels de capteur de vision en fonction d'événement, EVS (46) ;
la génération en fonction des niveaux de luminance mesurés d'informations auxiliaires apparentées à des dégradations dans des événements déclencheurs par la pluralité de pixels EVS (46) ;
la réception d'événements déclenchés par la pluralité de pixels EVS (46), les événements peuvent être représentés à l'aide d'une première représentation étant bruitée en raison des dégradations ;
la génération, en fonction des informations auxiliaires, d'une seconde représentation des événements qui est moins bruitée que la première représentation ; et
la sortie des événements conformément à la seconde représentation ;
dans lequel les temps d'occurrence des événements diffèrent de temps respectifs auxquels les pixels EVS (46) sont ajustés pour générer les événements, par des valeurs de latence respectives qui dépendent au moins de valeurs de luminance auxquelles les pixels EVS (46) sont exposés,
**caractérisé en ce que** la génération des informations auxiliaires comprend l'estimation des valeurs de latence en dépendance des valeurs de luminance, et dans lequel la génération de la seconde représentation comprend un filtrage des événements en dépendance des valeurs de latence estimées.

10. Procédé selon la revendication 9, dans lequel la génération des informations auxiliaires comprend l'évaluation, en fonction des niveaux de luminance mesurés, des propriétés statistiques des valeurs de latence pour un ou plusieurs groupes des pixels EVS (46), et la génération des informations auxiliaires pour les pixels EVS (46) dans le ou les groupes en fonction des propriétés statistiques respectives des valeurs de latence dans le ou les groupes.

11. Procédé selon la revendication 10, et comprenant la détermination, en fonction des propriétés statistiques, d'un ou plusieurs filtres spatio-temporels, et le filtrage des événements à l'aide du ou des filtres spatio-temporels ;
en particulier dans lequel au moins l'un des filtres spatio-temporels comprend un filtre linéaire.

12. Procédé selon la revendication 9, dans lequel le filtrage des événements comprend le filtrage des événements reçus pour améliorer la précision des temps d'occurrence rapportés par les événements ; ou
dans lequel la génération des informations auxiliaires comprend l'évaluation d'une valeur de latence moyenne pour un ou plusieurs pixels EVS (46) en fonction des niveaux de luminance mesurés, et dans lequel le filtrage des événements comprend le filtrage d'événements reçus sélectionnés déclenchés par le ou les pixels EVS (46) en modifiant les temps d'occurrence rapportés par les événements reçus sélectionnés en fonction de la valeur de latence moyenne ; ou
dans lequel la génération des informations auxiliaires comprend l'évaluation pour un ou plusieurs pixels EVS (46), en fonction des niveaux de luminance mesurés, d'une valeur d'écart-type, STD, des valeurs de latence associées aux événements reçus, et dans lequel le filtrage des événements comprend la détermination d'un filtre en fonction de la valeur de latence STD évaluée, et le filtrage des événements reçus déclenchés par le ou les pixels EVS (46) à l'aide du filtre déterminé, pour produire un événement filtré correspondant de la seconde représentation.

13. Procédé selon la revendication 9, dans lequel la génération des informations auxiliaires comprend la génération des événements auxiliaires en fonction d'une configuration du capteur d'image auxiliaire (54) et d'un système de caméra comprenant le capteur d'image auxiliaire (54), comportant au moins une ou plusieurs parmi (i) un temps d'exposition du capteur d'image auxiliaire (54), (ii) un gain du capteur d'image auxiliaire (54), et (iii) une ouverture optique du système de caméra.

14. Procédé selon la revendication 9, dans lequel la génération des informations auxiliaires comprend l'évaluation, en fonction des niveaux de luminance mesurés, d'informations indiquant des fréquences attendues des événements dans une ou plusieurs régions des pixels EVS (46), et dans lequel la génération de la seconde représentation comprend la détermination de filtres correspondant aux régions en fonction des fréquences attendues respectives, et le filtrage des événements reçus à l'aide des filtres déterminés ;
en particulier dans lequel la génération de la seconde représentation comprend l'identification d'une région dans laquelle les pixels (46) sont censés ne produire aucun événement, et l'élimination par filtrage des événements qui ont été déclenchés par les pixels (46) appartenant à la région identifiée.

15. Procédé selon la revendication 9, et comprenant la sortie des événements, conformément à la seconde représentation, par l'intermédiaire d'une interface (40), vers un processeur (28) exécutant une application sélectionnée, et le filtrage des événements reçus, avant d'être délivrés en sortie, à l'aide d'un filtre qui est adapté à l'application sélectionnée.
